(19) **Europäisches Patentamt / European Patent Office / Office européen des brevets**

(11) **EP 2 715 392 B1**

(12) **FASCICULE DE BREVET EUROPEEN**

| | |
|---|---|
| (45) Date de publication et mention de la délivrance du brevet: **01.04.2015 Bulletin 2015/14** | (51) Int Cl.: **G01S 5/02** (2010.01) **H04W 64/00** (2009.01) **H04B 7/185** (2006.01) |
| (21) Numéro de dépôt: **12723647.9** | (86) Numéro de dépôt international: **PCT/EP2012/059537** |
| (22) Date de dépôt: **23.05.2012** | (87) Numéro de publication internationale: **WO 2012/163744 (06.12.2012 Gazette 2012/49)** |

(54) **PROCEDE DE LOCALISATION D'UN TERMINAL A LA SURFACE D'UNE ZONE DE COUVERTURE AU MOYEN D'UN RESEAU DE TELECOMMUNICATION UTILISANT UN SATELLITE MULTIFAISCEAUX**

VERFAHREN FÜR DAS ORTEN EINES ENDGERÄTES IN EINEM DECKUNGSGEBIET MIT HILFE EINES TELEKOMMUNIKATIONSNETZWERKES, DAS EIN MEHRFACHKEULENSATELLITEN VERWENDET

METHOD FOR LOCATING A TERMINAL AT THE SURFACE OF A COVERAGE ZONE BY MEANS OF A TELECOMMUNICATION NETWORK USING A MULTIBEAM SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2011 FR 1154663**

(43) Date de publication de la demande:
**09.04.2014 Bulletin 2014/15**

(73) Titulaire: **Eutelsat S.A.**
**75015 Paris (FR)**

(72) Inventeurs:
• **ARCIDIACONO, Antonio**
**F-75016 Paris (FR)**

• **FINOCCHIARO, Daniele Vito**
**F-75015 Paris (FR)**
• **LE PERA, Alessandro**
**F-92130 Issy-les-Moulineaux (FR)**

(74) Mandataire: **Lebkiri, Alexandre**
**Cabinet Camus Lebkiri**
**25, Rue de Maubeuge**
**75009 Paris (FR)**

(56) Documents cités:
**EP-A2- 0 848 506       WO-A1-2009/007513**
**US-B1- 6 400 319       US-B1- 6 515 617**
**US-B1- 6 871 061**

**Description**

La présente invention concerne un procédé de localisation d'un terminal à la surface d'une zone de couverture au moyen d'un réseau de télécommunication pour l'établissement de liaisons radiofréquences. Le procédé de géolocalisation s'applique plus spécifiquement à un réseau utilisant un satellite à plusieurs faisceaux, dit satellite multifaisceaux. Ce type de satellite permet l'utilisation de plusieurs faisceaux à bord du satellite pour couvrir des zones géographiques ou cellules, au lieu d'un seul faisceau large.

On connait de nombreux procédés de géolocalisation de terminaux à la surface d'une zone de couverture donnée.

Le plus connu d'entre eux est le système GPS « Global Positioning System » fonctionnant grâce au calcul de la distance qui sépare un terminal intégrant un récepteur GPS et plusieurs satellites. Un tel système pose toutefois un certain nombre de difficultés.

En premier lieu, le système suppose bien entendu que le terminal intègre un récepteur GPS et ne couvre donc pas un terminal de télécommunication générique.

En outre, il est parfois important de connaître de façon certaine la position d'un terminal auprès d'un centre de service, plutôt que sur le terminal lui-même (typiquement dans le cas de la géolocalisation d'une flotte de véhicules par une entreprise). Dans ce cas, le terminal GPS transmet sa position à l'entreprise via un réseau de télécommunications. Une telle solution peut toutefois présenter certains inconvénients dans la mesure où l'utilisateur du terminal peut falsifier les données GPS transmises (par exemple via un émulateur GPS).

Une autre solution connue consiste à utiliser un service du type OmniTRACS™. Un boîtier installé sur un véhicule effectue des mesures sur des données envoyées par une station terrestre de type « hub » à travers plusieurs satellites de télécommunication puis transmet les mesures effectuées via un satellite vers une station terrestre ou un centre d'exploitation du réseau de type NOC (« Network Operating Center ») qui va traiter les mesures effectuées et déterminer la position du véhicule.

Outre le coût non négligeable d'un tel système (lié notamment à la présence d'un boîtier sophistiqué munie d'une antenne mobile ou « steerable » en anglais), la falsification des données transmises est à nouveau parfaitement envisageable, le NOC ne disposant d'aucun moyen pour certifier la position du véhicule ou terminal.

En général, les méthodes connues aujourd'hui pour déterminer, auprès d'un centre de service, la position d'un terminal de coût limité se basent sur des données mesurées et ensuite envoyées par le terminal lui-même, et il n'est pas possible pour le centre de service d'établir l'authenticité de ces données, et donc de la position du terminal calculé à partir de ces données.

Dans ce contexte, la présente invention vise à fournir un procédé économique de localisation d'un terminal à la surface d'une zone de couverture au moyen d'un réseau de télécommunication, la détermination de la localisation se faisant de façon certaine (i.e. sans falsification possible de la part de l'utilisateur du terminal) et tout en utilisant un terminal de télécommunication.

A cette fin, l'invention propose un procédé de localisation d'un terminal à la surface d'une zone de couverture au moyen d'un réseau de télécommunication pour l'établissement de liaisons radiofréquences, le réseau comportant un satellite de télécommunication à plusieurs faisceaux, dit satellite multifaisceaux, ledit satellite multifaisceaux comportant une antenne multifaisceaux, ladite zone de couverture étant composée d'une pluralité de cellules, chaque cellule étant associée à au moins un faisceau de liaison avec le satellite auquel est attribué une bande de fréquence, ledit procédé comportant les étapes suivantes :

- transmission en voie montante par ledit terminal d'un message incorporé dans un signal modulé vers ledit satellite à une fréquence partagée par au moins trois faisceaux différents de liaison en voie montante de sorte que ledit message soit reçu par ledit satellite multifaisceaux via ladite antenne multifaisceaux avec trois amplitudes différentes ;
- transmission en voie descendante par ledit satellite multifaisceaux de trois signaux modulés incorporant ledit message, les premier, deuxième et troisième signaux correspondant chacun à un faisceau différent parmi lesdits trois faisceaux ;
- réception par des moyens de réception terrestres desdits premier, deuxième et troisième signaux ;
- détermination par des moyens de calcul terrestres des amplitudes du message envoyé par le terminal contenu dans lesdits premier, deuxième et troisième signaux ;
- détermination de la localisation dudit terminal à partir desdites amplitudes dudit message incorporé dans lesdits premier, deuxième et troisième signaux.

On entend par terminal un terminal qui peut être fixe, transportable tel qu'un décodeur par exemple, ou mobile.

Selon l'invention, on utilise avantageusement trois faisceaux partageant une même fréquence en voie montante ; le message transmis par le terminal est reçu par l'antenne multifaisceaux du satellite avec trois amplitudes différentes ; trois signaux incorporant ledit message correspondant à ces trois amplitudes et possédant les mêmes données utiles sont transmis en voie descendante vers des moyens terrestres de réception (typiquement une station terrestre) qui va détecter le message dans chacun des trois signaux et en déterminer les amplitudes. La connaissance de ces amplitudes va permettre de positionner le terminal sur la zone de service en utilisant le lien entre les amplitudes du message dans les signaux reçus et les facteurs de mérite associés à la position du terminal par rapport à chacune des cellules associées respectivement aux trois faisceaux.

On notera que grâce à l'invention la détermination de la position du terminal se fait sans adaptation du terminal qui peut être un terminal standard de télécommunication. En outre, le terminal n'effectue aucun calcul spécifique pour la détermination de sa position.

En outre, un unique satellite de télécommunication multifaisceaux est nécessaire à la mise en oeuvre du procédé selon l'invention ; ce satellite peut être utilisé à la fois pour la mise en oeuvre du procédé selon l'invention et pour assurer des communications.

On notera que le terminal n'intervient pas dans la détermination de sa position ; dès lors, l'utilisateur du terminal ne peut pas falsifier la position de ce dernier.

Le procédé selon l'invention peut également présenter une ou plusieurs des caractéristiques ci-dessous, considérées individuellement ou selon toutes les combinaisons techniquement possibles :

- ledit signal incorporant ledit message émis par le terminal (et donc lesdits trois signaux reçus par l'antenne multifaisceaux) est modulé selon un protocole à étalement de spectre ;
- ledit message incorporé dans ledit premier signal est reçu par lesdits moyens de réception terrestres avec une amplitude plus importante que celle dudit message incorporé dans les deuxième et troisième signaux, ledit procédé comportant les étapes suivantes :

  o démodulation par lesdits moyens de calcul terrestres dudit premier signal de façon à récupérer les informations relatives au message suivantes :

    ■ les données utiles du message ;
    ■ les paramètres d'émission et/ou de codage dudit message ;

  o utilisation desdites informations relatives au message pour rechercher ledit message respectivement dans lesdits deuxième et troisième signaux par lesdits moyens de calcul terrestres (l'utilisation desdites informations permet d'accélérer cette recherche par rapport à une recherche standard dans laquelle on ne disposerait pas de ces mêmes informations) ;

- ledit signal incorporant ledit message émis par le terminal est modulé selon un protocole à étalement de spectre et lesdits paramètres d'émission et/ou de codage récupérés comportent la séquence binaire d'étalement de spectre ;
- lesdits moyens de calcul terrestres retrouvent ledit message respectivement dans lesdits deuxième et troisième signaux par une opération de corrélation ;
- la transmission en voie descendante par ledit satellite multifaisceaux desdits trois signaux modulés incorporant ledit message se fait à trois fréquences différentes les unes des autres ;
- le procédé selon l'invention comporte une étape de détermination d'au moins deux des trois différences des amplitudes du message incorporé dans lesdits premier, deuxième et troisième signaux ;
- le procédé selon l'invention comporte :

  o une étape de détermination des courbes représentant la différence des facteurs de mérite correspondant aux dites différences d'amplitudes ;
  o une étape de détermination de la localisation dudit terminal correspondant à l'intersection desdites courbes ;

- lesdits moyens de réception terrestres reçoivent périodiquement des messages par un ou plusieurs terminaux de référence dont la position exacte est connue (par exemple contenue dans le message lui-même), la ou lesdites position(s) permettant de corriger les lignes de facteurs de mérite utilisées pour la détermination de la position dudit terminal ;
- on détermine les trois différences des amplitudes du message incorporé dans lesdits premier, deuxième et troisième signaux ;
- les informations récupérées par lesdits moyens de calcul terrestres dans ledit premier signal comportent le préambule dudit message.

D'autres caractéristiques et avantages de l'invention ressortiront clairement de la description qui en est donnée ci-dessous, à titre indicatif et nullement limitatif, en référence aux figures annexées, parmi lesquelles :

- la figure 1 est une représentation schématique simplifiée d'un réseau à configuration multifaisceaux pour la mise en oeuvre du procédé selon l'invention;
- la figure 2 illustre les différentes étapes du procédé selon l'invention ;
- la figure 3 illustre une série de lignes de facteurs de mérite correspondant à un premier faisceau d'une zone de couverture ;
- la figure 4 illustre une série de lignes de facteurs de mérite correspondant à un deuxième faisceau de la même zone de couverture que la figure 3 ;
- la figure 5 illustre une série de lignes de facteurs de mérite correspondant à un troisième faisceau de la même zone de couverture que la figure 3 ;
- la figure 6 illustre une série de lignes représentant la différence de facteurs de mérite des figures 3 et 4 ;
- la figure 7 illustre une série de lignes représentant la différence de facteurs de mérite des figures 4 et 5 ;
- la figure 8 illustre une série de lignes représentant la différence de facteurs de mérite des figures 3 et 5 ;
- la figure 9 représente la zone de couverture ainsi que les lignes de différences de facteurs de mérite calculées à partir des cartographies de facteurs de mérite pour les trois valeurs de différences d'amplitudes déterminées par le procédé selon l'invention dans l'exemple spécifique décrit ultérieurement.

Dans toutes les figures, les éléments communs portent les mêmes numéros de référence.

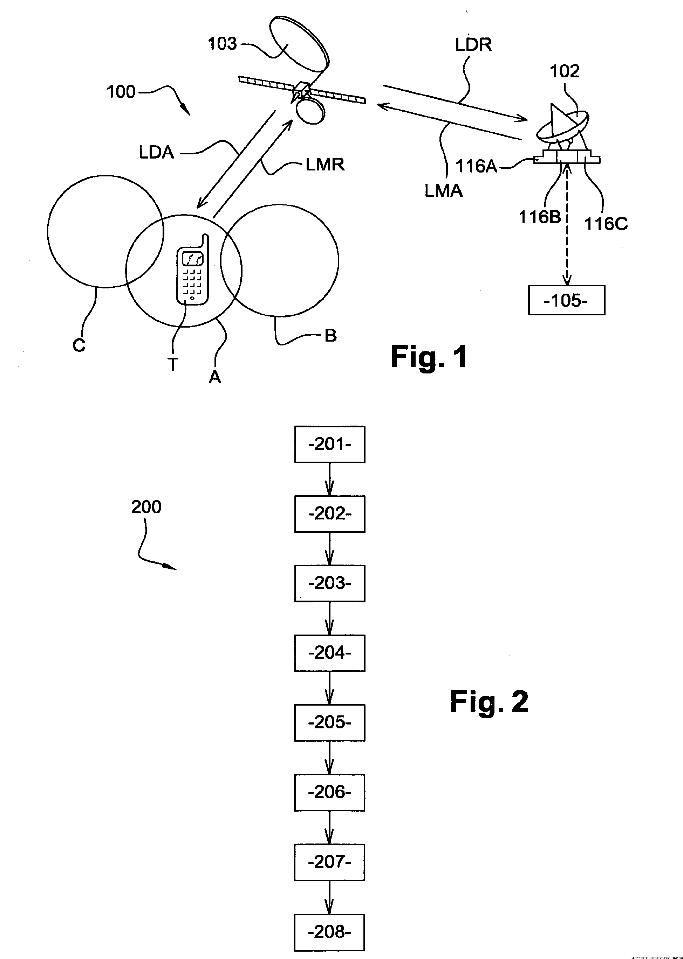

La figure 2 illustre les différentes étapes d'un procédé 200 de localisation d'un terminal dans un réseau de télécommunication selon l'invention. Ce procédé 200 peut par exemple être mis en oeuvre au moyen d'un réseau de télécommunication tel que le réseau 100 représenté en figure 1.

Ce réseau 100 comporte :

- au moins une station terrestre principale 102 telle qu'une passerelle de communication terrestre (« gateway » en anglais) ;
- un centre d'exploitation du réseau ou NOC « Network Operating Center » 105 ;
- une pluralité de terminaux mobiles dont un seul T, à titre d'illustration, est ici représenté ;
- un satellite multifaisceaux 103.

Le satellite multifaisceaux 103 est ici un satellite de type « transparent » (i.e. muni d'une charge utile transparente), dont la charge utile consiste essentiellement en une translation de fréquences des signaux reçus au niveau du satellite avant une amplification pour les réémettre sur une liaison descendante. En d'autres termes, le procédé selon l'invention s'applique à ce type de satellite transparent et non à des satellites de type « régénératif » (i.e. muni d'une charge utile régénérative) dont la charge utile démodule et remodule les signaux à bord du satellite.

Dans le cas de système de télécommunication satellitaire large bande (« broadband » en anglais) à haut débit, le satellite 103 est utilisé de façon bidirectionnelle, c'est-à-dire à la fois pour :

- relayer des données émises par la station terrestre principale 102 vers les terminaux T : cette première liaison de type point à multipoints constitue la voie aller (« forward link » en anglais) ;
- relayer vers la station terrestre principale 102 les données émises par les terminaux terrestres T : cette deuxième liaison, de type multipoints à point, constitue la voie retour (« return link » en anglais).

La station terrestre principale 102 est reliée au centre NOC 105 (typiquement via Internet). Le centre NOC 105 est un système de gestion du réseau qui permet à l'exploitant de surveiller et de contrôler tous les composants du réseau.

En voie retour, des signaux modulés sont envoyés vers le satellite multifaisceaux 103 sur une liaison montante LMR par le terminal terrestre T. Les signaux envoyés par les terminaux terrestres T sont ensuite traités au niveau du satellite 103 qui, via sa charge utile, les amplifie, les dérive à une fréquence appropriée puis les retransmet à partir de la ou des antennes satellitaires sur une liaison descendante LDR sous la forme d'un faisceau ou d'une pluralité de faisceaux vers la ou les station(s) terrestre(s) 102.

La voie aller incluant les liaisons montante LMA et descendante LDA de la ou des station(s) terrestre(s) 102 vers les terminaux terrestres T fonctionne de manière identique avec une direction de communication inverse. Dans le contexte de cette invention la voie aller n'est pas utilisée.

Le satellite 103 couvre une zone de couverture dans laquelle se trouvent les terminaux terrestres T décomposée en zones de couvertures élémentaires ou cellules. La configuration du réseau 100 tel que représenté en figure 1 utilise une technique dite de réutilisation des fréquences : cette technique permet d'utiliser une même plage de fréquences plusieurs fois dans le même système satellitaire afin d'accroître la capacité totale du système sans augmenter la bande passante attribuée.

Pour chaque cellule, il est possible d'utiliser au moins une bande de fréquence correspondant à une partie de la bande passante disponible. Chaque bande de fréquence est associée à un faisceau du satellite multifaisceaux 103. Ici, trois cellules A, B et C sont représentées, le terminal T tel qu'illustré se trouvant dans la cellule A. Chacune des cellules est illuminée individuellement par un faisceau (que l'on désignera également respectivement par les références A, B et C) d'antenne de l'antenne multifaisceaux du satellite 103.

En général, le gain d'antenne de chaque faisceau est élevé à l'intérieur de la cellule correspondante, et décroît à l'extérieur de la cellule. En conséquence, la terminal T sera mieux « entendu » par le satellite 103 sur le faisceau correspondant à la cellule A que sur les faisceaux correspondants aux cellules B et C (le satellite 103 est muni d'une antenne multifaisceaux qui écoute les différents faisceaux correspondant aux différentes cellules). Chaque bande de fréquence peut être décomposée en une pluralité de canaux de fréquences. Un terminal terrestre T va ainsi utiliser un canal de fréquence pour émettre ; ce même terminal T va également fonctionner dans un intervalle de temps (slot temporel) particulier.

Une cellule couvre une surface allant d'une centaine de kilomètres à quelques milliers de kilomètres (i.e. un pays entier). Lorsque l'on affirme qu'un faisceau couvre (ou correspond) à une cellule, cela signifie qu'une partie du gain de l'antenne de réception multifaisceaux du satellite est concentrée sur cette cellule de sorte que le facteur de mérite résultant est supérieur à une valeur seuil donnée S. Généralement exprimé en dB/K, le facteur de mérite, noté G/T, correspond au quotient du gain de l'antenne de réception dans la direction du terminal sur la température de bruit équivalente du système récepteur. On notera par la suite S(T,A) le facteur de mérite G/T associé à la cellule A (désignant indifféremment le faisceau A) pour la position du terminal T ; de façon plus générale, on notera par la suite S(Y,X) (exprimé en dB/K) le facteur de mérite G/T associé à la cellule X (faisceau X) pour la position du terminal Y. Ce facteur de mérite inclut le facteur de mérite de l'antenne satellitaire de réception (qui dépend de la position géographique du terminal), de l'amplificateur à bord du satellite, de l'antenne de réception de la station terrestre, de ses amplificateurs et câbles jusqu'à l'entrée du démodulateur. On notera que parmi tous les facteurs qui contribuent au G/T total, seulement le G/T de l'antenne multifaisceaux à bord du satellite change selon la position géographique du terminal.

Les procédés de codage et de modulation pour un système de télécommunication sont choisis de sorte que la valeur seuil S garantisse un niveau de qualité de service suffisant, ce niveau de qualité de service n'étant pas garanti si le terminal est localisé à un endroit où le facteur de mérite est inférieur à la valeur seuil S (le terminal est alors considéré comme étant en dehors de la couverture du faisceau). En pratique, il est clair que le facteur de mérite décroit progressivement quand on sort de la cellule. La couverture d'une cellule est représentée par une série de lignes (ou figures) de facteurs de mérite successives et sensiblement concentriques, le facteur de mérite étant identique en tout point de chaque ligne et diminuant à mesure que l'on s'éloigne du centre de la cellule. La géométrie exacte peut être très complexe et dépend de la manière dont l'antenne (réflecteurs, réseau de formation des faisceaux ou « beam forming network » en anglais, ...) est réalisée.

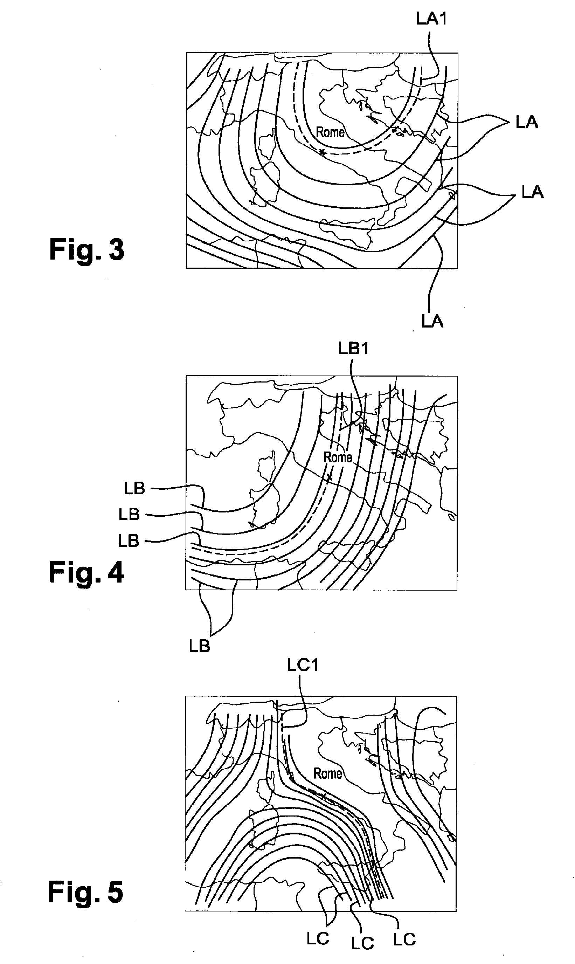

La figure 3 illustre une série de lignes LA de facteurs de mérite correspondant à un premier faisceau A dans la zone de couverture de l'Europe.

La figure 4 illustre une série de lignes LB de facteurs de mérite correspondant à un second faisceau B dans la zone de couverture de l'Europe.

La figure 5 illustre une série de lignes LC de facteurs de mérite correspondant à un troisième faisceau C dans la zone de couverture de l'Europe.

Sur les figures 3 à 5, le passage d'une ligne à l'autre se fait selon un pas de 1 dB/K, la ligne contournant la zone de plus faible diamètre présentant le facteur de mérite le plus élevé, étant entendu que la diminution du facteur de mérite du centre de la cellule vers son extérieur se fait de façon continue.

A titre d'exemple, on constate ainsi sur ces figures 3 à 5 que la ville de Rome est couverte par les trois faisceaux A, B et C avec des facteurs de mérite différents, respectivement 8.7dB/K pour le faisceau A (figure 3), 6.5dB/K pour le faisceau B (figure 4) et -5dB/K pour le faisceau C (figure 5). Les lignes LA1, LB1 et LC1 passant par Rome ont été représentées en pointillés à titre purement illustratif.

On constate donc que la connaissance des trois lignes LA1, LB1 et LC1 de facteurs de mérite permet de déterminer la position d'un terminal émettant de Rome et se trouvant à l'intersection de ces trois lignes. Ce résultat va être avantageusement utilisé par le procédé selon l'invention.

Nous ferons dans ce qui suit l'hypothèse que les cellules A, B et C représentées de façon schématique en figure 1 correspondent aux figures de mérite représentées respectivement sur les figures 3, 4 et 5.

Le procédé 200 de localisation d'un terminal à la surface d'une zone de couverture (ici l'Europe) au moyen d'un réseau de télécommunication 100 tel que celui de la figure 1 fonctionne de la manière suivante.

Nous ferons ici l'hypothèse que les trois cellules A, B et C (correspondant aux faisceaux A, B et C) sont associées à une même bande de fréquence et que le terminal terrestre T est localisé dans la cellule A. Le terminal T est par exemple localisé à Rome.

La station terrestre principale comporte ici trois démodulateurs/décorrélateurs 116A, 116B et 116C adaptés pour démoduler respectivement les signaux provenant des cellules A, B et C.

Les modulations fonctionnent par exemple suivant un protocole asynchrone à accès aléatoire multiple à étalement de bande par modulation du type SPREAD ALOHA utilisant des techniques d'élimination d'interférences. Un tel protocole est par exemple décrit dans le document US2010/054131 (del Rio Herrero et al.).

Dans le cas illustré en figure 1, le terminal T situé dans la cellule A sera « entendu » à une certaine puissance par le démodulateur 116A, à une puissance plus faible par le démodulateur 116B et à une puissance encore plus faible pour le démodulateur 116C. Pour mémoire, la ville de Rome est couverte par les trois faisceaux A, B et C avec des facteurs de mérite décroissants (figures 3 à 5).

On notera par ailleurs que nous avons représenté ici une unique station terrestre 102 comportant trois démodulateurs mais qu'il est également possible d'avoir trois stations terrestres localisées à des endroits différents.

Selon une première étape 201 du procédé 200 selon l'invention, le terminal T transmet en voie montante LMR un message incorporé dans un signal modulé SM vers le satellite 103 à une fréquence appartenant à la bande de fréquences partagée par les trois faisceaux A, B et C.

Le procédé selon l'invention utilise préférentiellement un codage et une modulation choisis afin d'obtenir une valeur seuil S (telle que définie plus haut) très basse. Ceci équivaut à élargir les cellules par rapport à un système de télécommunication classique, pour que le signal SM émis puisse être récupéré sur trois cellules différentes.

Selon une étape 202, ledit signal SM incorporant le message émis par le terminal est reçu par l'antenne multifaisceaux du satellite 103 ; le message inclus dans le signal SM est reçu avec trois amplitudes différentes selon qu'il est reçu par les parties de l'antenne correspondant respectivement aux faisceaux A, B et C ; l'antenne comporte un ou plusieurs réflecteurs ainsi qu'un réseau de formation de signaux de faisceaux («beam forming network » en anglais) à destination des entrées du répéteur du satellite. Comme déjà évoqué plus haut, l'amplitude du message incorporé dans le signal reçu sur le faisceau A sera la plus élevée, l'amplitude du message incorporé dans le signal reçu sur le faisceau B étant plus faible, et l'amplitude du message incorporé dans le signal reçu sur le faisceau C étant la plus faible des trois. On peut donc considérer qu'à partir d'un seul signal incorporant un message envoyé par le terminal T, on dispose, au niveau du satellite, de trois signaux incorporant ce même message mais avec des amplitudes différentes.

Selon une étape 203, les signaux incluant la copie du message avec trois amplitudes différentes sont ensuite traités au niveau du satellite 103 qui, via sa charge utile, les dérive et les module à une fréquence appropriée (ici trois fréquences différentes pour chacun des signaux), les amplifie, puis transmet en voie descendante LDR ces trois signaux S1, S2 et S3 modulés à des fréquences différentes et incorporant ledit message à partir de la ou des antennes satellitaire(s) vers la station terrestre 102 ; les trois signaux S1 à S3 contiennent chacun une réplique du message unique envoyé par le terminal T et reçu par le satellite selon les trois faisceaux A, B et C. Les trois signaux S1 à S3 peuvent aussi contenir des signaux en provenance d'autres terminaux ainsi que de l'interférence et du bruit.

Selon une étape 204, on comprend aisément que le démodulateur 116A (faisceau A) recevra le signal provenant du terminal T avec davantage de puissance que les démodulateurs 116B (faisceau B) et 116C (faisceau C).

Dans la mesure où le bilan de liaison correspondant à la transmission du signal selon le faisceau A est bon, le démodulateur 116A est capable de traiter ce signal et de récupérer les informations correspondant au message transmis par le terminal. Ces informations contiennent les données utiles du message mais également l'identifiant du terminal, la phase du signal, la position temporelle (i.e. numéro d'échantillon relatif à l'horloge de la station terrestre 102) du message dans le signal reçu ; le démodulateur 116A en recherchant le message va également déterminer la séquence binaire d'étalement de spectre (« spreading séquence » en anglais). Les informations binaires contenues dans le signal radioélectrique sont par exemple extraites par deux opérations effectuées souvent de manière enchevêtrées, une première opération de transposition en fréquence à l'aide d'une porteuse engendrée localement par circuit de type oscillateur PLL (« Phase Lock Loop ») permettant de transposer le signal en bande de base et une deuxième opération consistant par exemple à échantillonner le signal, à opérer une étape de désétalement à l'aide de séquences binaires pseudo-aléatoires engendrées localement par un générateur de séquences binaires et à démoduler le signal désétalé ; le démodulateur génère ainsi plusieurs séquences binaires puis effectue une opération de corrélation. Pour récupérer les informations du message, le démodulateur doit générer la même séquence d'étalement que celle utilisée en émission et la multiplier par le signal reçu, les données codées par cette séquence étant ainsi restaurées par une opération de corrélation (désétalement).

Selon l'étape 205, disposant de la connaissance complète du message envoyé par le terminal T ainsi que des paramètres de transmission (i.e. la séquence binaire d'étalement de spectre), les démodulateurs 106B et 106C sont chacun capables de retrouver le message transmis par le terminal T dans les signaux respectifs S2 et S3 reçus. Pour ce faire, chacun des démodulateurs 106B et 106, outre une transposition en fréquence et un échantillonnage, effectue une opération de corrélation simplifiée par la connaissance des données utiles du message, du préambule du message et de la séquence binaire d'étalement de spectre. Le fait de connaître le message facilite considérablement la recherche du message dans le signal par les démodulateurs 106B et 106C qui reçoivent le signal avec un rapport signal sur bruit beaucoup plus faible que celui du démodulateur 106A. On notera par ailleurs que le démodulateur 106A peut également communiquer une information relative au numéro de l'échantillon de façon à permettre aux démodulateurs 106B et 106C de gagner du temps pendant l'opération de corrélation (i.e. disposer d'une fenêtre temporelle dans laquelle se trouve le message et où les démodulateurs 106B et 106C peuvent aller directement chercher). Une autre manière d'améliorer le rapport signal sur bruit peut consister à utiliser un procédé d'annulation d'interférences pour les signaux provenant de chacune des cellules A, B et C (annulation d'interférences intracellulaire). Pour ce faire, pour chaque cellule, la station terrestre 102 reconstruit un signal « propre » (i.e. signal non bruité) à partir des données récupérées du message puis soustrait ce signal « propre » du signal reçu. Le nouveau signal obtenu subit à son tour une démodulation par le démodulateur correspondant à la cellule (116A, 116B ou 116C). Cette opération peut être répétée pour d'autres paquets. Son principe de fonctionnement consiste à régénérer de l'interférence en utilisant le signal estimé à la sortie de l'étage courant. Cette interférence est ensuite retranchée du signal reçu et le signal résultant constitue l'entrée de l'étage suivant. L'opération peut être faite en groupant plusieurs paquets (par exemple dix paquets sont démodulés avant de régénérer le signal à soustraire).

Ainsi, après l'étape 205, la station terrestre 102 dispose d'une connaissance complète du message envoyé par le terminal T et de sa position à l'intérieur des signaux reçus à partir des trois faisceaux A, B et C.

Selon l'étape 206, la station terrestre 102 va déterminer à partir de de la connaissance complète du message envoyé et de sa position à l'intérieur des signaux reçus l'amplitude P(T, A), P(T, B) et P(T, C) à laquelle elle a reçu ledit message à l'intérieur des signaux S1 à S3 correspondant respectivement aux faisceaux A, B et C. Chacune des amplitudes P(T,A), P(T,B) et P(T,C) correspond respectivement aux puissances auxquelles le message transmis par le terminal T selon les faisceaux respectifs A, B et C a été reçu par la station terrestre 102. Différentes méthodes de détermination d'amplitudes sont par exemple décrites dans les documents suivants : « Analysis of a DS/CDMA successive interférence cancellation scheme using corrélations » (P. Patel, J. Holtzman, IEEE Global Telecommunications Conférence 1993, GLOBECOM '93, Houston TX USA, 29 Nov-2 Dec 1993, pp. 76-80 vol. 1), « Analysis of a simple successive interférence cancellation scheme in a DS/CDMA system IEEE Journal on Selected Areas in Communications » (P. Patel, J. Holtzman, Jun 1994, Volume 12, Issue 5, pp. 796-807), « Practical Implementation of Successive interférence Cancellation in DS/CDMA Systems » (K. Pedersen, T. Kolding, I. Seskar, J. Holtzman, Proceedings ICUPC'96, Cambridge, MA, pp. 321-325). On notera que les différentes étapes de calcul décrites peuvent être réalisées par des moyens de calculs inclus dans la station terrestre 102 ou dans le centre d'exploitation du réseau NOC 105.

On notera également que les calculs ne sont pas nécessairement tous réalisés en temps réel ; typiquement, les opérations de corrélation peuvent être réalisées après que les données nécessaires à ces opérations aient été stockées selon la nature du service demandé.

En partant de l'hypothèse qu'une même station terrestre 102 reçoit l'ensemble des trois signaux (et donc qu'on a un même bilan de liaison), on peut montrer que P(T,A) est proportionnel à la PIRE (Puissance Isotrope Rayonnée Equivalente ou EIRP) d'émission du terminal T et à la figure de mérite S(T,A) du faisceaux A à la position du terminal ; le même raisonnement s'applique pour P(T,B) et P(T,C). Comme la PIRE est la même dans tous le cas, s'agissant d'un seul signal émis par le terminal, on a alors les trois relations suivantes indépendantes de la PIRE d'émission du terminal :

$$P(T,A) - P(T,B) = S(T,A) - S(T,B).$$

$$P(T,B) - P(T,C) = S(T,B) - S(T,C).$$

$$P(T,A) - P(T,C) = S(T,A) - S(T,C).$$

Pour mémoire, S(Y,X) (exprimé en dB/K) représente le facteur de mérite G/T associé à la cellule X pour la localisation du terminal Y.

Selon une étape 207 du procédé, on procède ainsi aux calculs des trois différences P(T,A) - P(T,B), P(T,B) - P(T,C) et P(T,A) - P(T,C).

On notera que si la puissance PIRE du terminal était connue, on pourrait calculer directement le facteur de mérite à partir de l'amplitude reçue pour chaque faisceau. La connaissance de ces facteurs de mérite permettrait, en se plaçant sur la ligne de facteur mérite correspondante (cf. figures 3 à 4) de déterminer l'emplacement du terminal T utilisant seulement deux faisceaux. Toutefois, on connaît rarement précisément la puissance EIRP du terminal : elle peut varier selon le type d'antenne utilisée par le terminal, selon l'environnement ; en plus, l'utilisateur pourrait essayer de la faire varier pour changer sa position apparente. Dès lors, le procédé selon l'invention utilise préférentiellement la différence des amplitudes déterminées selon l'étape 206 pour s'affranchir de la connaissance de l'EIRP en calculant la différence des facteurs de mérite associés respectivement à deux cellules pour le même terminal T.

Les valeurs ci-dessous sont données à titre purement illustratif. Supposons qu'à une certaine PIRE utilisée par le terminal T correspondent les amplitudes suivantes calculées par les démodulateurs :

$$P(T,A) = -145.4\text{dBW}$$

$$P(T,B) = -147.6\text{dBW}$$

$$P(T,C) = -159.1\text{dBW}.$$

On en déduit les valeurs suivantes, qui sont indépendants de la PIRE du terminal :

$$P(T,A) - P(T,B) = S(T,A) - S(T,B) = 2.2\text{dB}$$

$$P(T,B) - P(T,C) = S(T,B) - S(T,C) = 11.5\text{dB}$$

$$P(T,A) - P(T,C) = S(T,A) - S(T,C) = 13.7\text{dB}$$

Pour mémoire, on connaît par ailleurs la cartographie des lignes de facteurs de mérite telles que représentées sur les figures 3 à 5 (i.e. une ligne de facteur de mérite correspond à une ligne de la zone de couverture pour un faisceau donné sur laquelle le facteur de mérite a la même valeur).

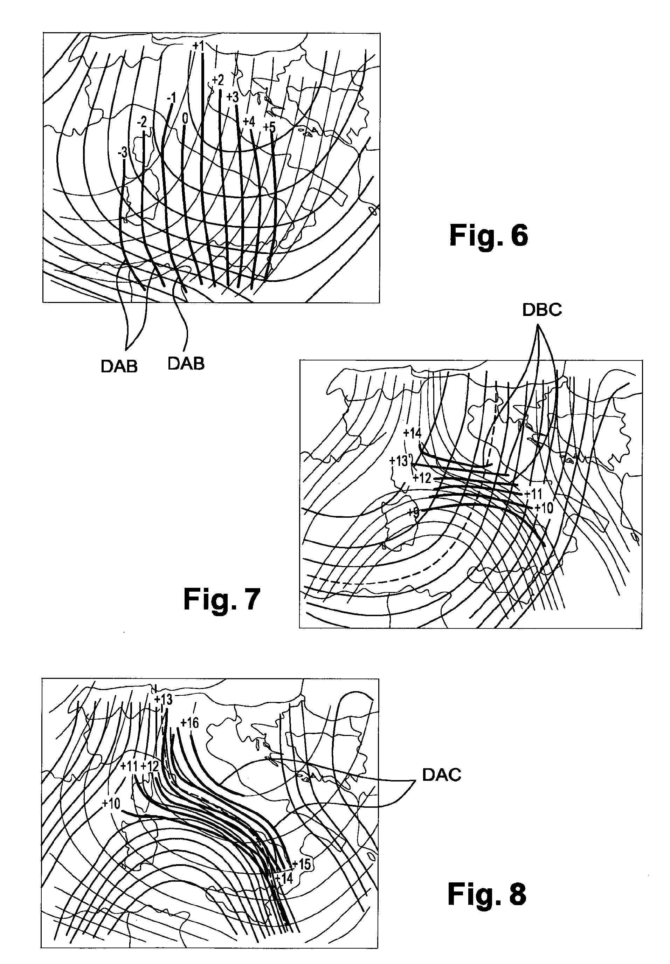

A partir de ces lignes, il est donc possible de tracer des lignes représentant la différence entre le facteur de mérite correspondant à un premier faisceau et le facteur correspondant à un second faisceau. A titre illustratif, la figure 6 illustre quelques lignes DAB représentant la différence des facteurs de mérite entre la figure 3 et la figure 4. La figure 7 illustre quelques lignes DBC représentant la différence des facteurs de mérite entre la figure 4 et la figure 5. La figure 8 illustre quelques lignes DAC représentant la différence des facteurs de mérite entre la figure 3 et la figure 5.

Selon l'étape 208 du procédé, connaissant les valeurs des différences entre les facteurs de mérite associés aux faisceaux A, B et C pour la localisation du terminal T, on peut déterminer les lignes de différences de facteurs de mérite correspondant aux trois valeurs P(T,A) - P(T,B) = 2.2dB, P(T,B) - P(T,C) = 11.5dB et P(T,A) - P(T,C) = 13.7dB.

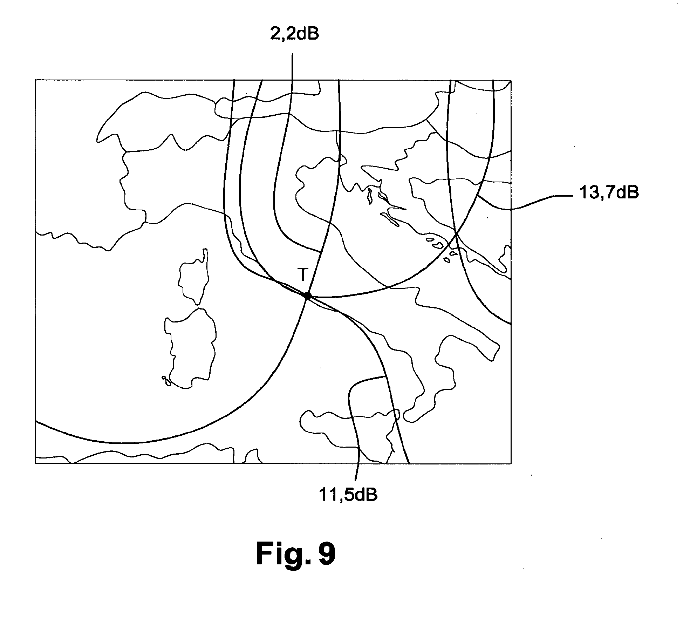

La figure 9 représente la zone de couverture ainsi que les lignes de différences de facteurs de mérite calculées à partir des cartographies de facteurs de mérite pour les trois valeurs de différences d'amplitudes 2.2dB, 11.5dB et 13.7dB.

Selon l'étape 209, on en déduit la position du terminal T se trouvant à l'intersection de ces trois lignes de différences de facteurs de mérite. On notera que deux lignes de différences suffisent pour déterminer la position, la troisième venant affiner le résultat. En revanche, le procédé selon l'invention nécessite la détermination d'au moins trois amplitudes pour parvenir à la détermination de ces différences.

On notera par ailleurs que nous avons fait l'hypothèse qu'une même station terrestre 102 reçoit l'ensemble des trois signaux (et donc qu'on a un même bilan de liaison), de sorte que les trois relations suivantes soient vérifiées:

$$P(T,A) - P(T,B) = S(T,A) - S(T,B).$$

$$P(T,B) - P(T,C) = S(T,B) - S(T,C).$$

$$P(T,A) - P(T,C) = S(T,A) - S(T,C).$$

Comme mentionné plus haut, le procédé selon l'invention s'applique également dans le cas où plusieurs stations terrestres sont utilisées de sorte que les trois signaux transmis par le satellite ne sont pas reçus par la même station terrestre.

Dans ce cas, nous supposerons l'existence d'un terminal de référence R parfaitement localisé dans la zone de couverture et différent du terminal T tel que l'on connaisse avec une bonne précision :

- les facteurs de mérite S(R,A), S(R,B) et S(R,C) associés à la position du terminal terrestre R par rapport aux cellules A, B et C ;
- les puissances P(R,A), P(R,B) et P(R,C) à laquelle le message transmis par le terminal R est reçu par les différentes stations terrestres 102A.

Le rapport des puissances normalisées du terminal T et du terminal de référence R est le même, indépendamment de la cellule A ou B ; la puissance normalisée est donnée par le ratio entre la puissance reçue et le facteur de mérite ; lorsque la puissance reçue et le facteur de mérite sont exprimés en dB, ce ratio s'exprime par la différence : P(Y,X) - S(Y,X) ; dès lors, on a alors la relation :

$$P(T,A) - S(T,A) - (P(R,A) - S(R,A)) = P(T,B) - S(T,B) - (P(R,B) - S(R,B)).$$

On en déduit la différence S(T,A) - S(T,B) estimée par la relation :

$$S(T,A) - S(T,B) = P(T,A) - P(T,B) + P(R,A) - S(R,A) - P(R,B) + S(R,B)$$

On calcule les différences S(T,B) - S(T,C) et S(T,A) - S(T,C) de façon similaire. Une fois les différences obtenues, la suite du procédé selon l'invention est identique.

On a fait l'hypothèse que la station terrestre connaît avec un détail suffisant les cartographies de couverture pour les différents faisceaux (i.e. connaît la figure de mérite G/T pour tous les points à l'intérieur de la zone de service). Ces cartographies sont construites généralement pendant une phase de test dite IOT (« in-orbit test ») d'un satellite. Les valeurs de G/T pour une position peuvent ensuite varier pour différentes raisons (mouvements du satellite, effets thermiques sur les réflecteurs ou autres composantes du satellite). Ceci est susceptible d'induire une perte de précision dans la localisation obtenue par le procédé de l'invention. Pour réduire l'erreur obtenue, on peut utiliser un ou des terminaux de référence qui peuvent être déployés : ces terminaux de référence, qui sont contrôlés par l'opérateur de service, sont donc « fiables » et calculent leur position exacte par un autre moyen (e.g. GPS, EGNOS) que le procédé selon l'invention ; les terminaux de référence envoient périodiquement des messages « pilotes ». La station terrestre connaît pour chaque message reçu la position exacte du terminal de référence qui l'a envoyé (par exemple : la position est fixe et déjà connue ; elle est communiquée par un réseau quelconque de communication ; elle est contenue dans le message pilote). Grâce à la mesure des messages pilotes, la station terrestre peut corriger dynamiquement les cartographies de couverture dans les zones correspondant aux positions des terminaux de référence et, par interpolation, dans le reste de la zone de couverture, de façon à réduire l'erreur de localisation du procédé.

Le procédé selon l'invention permet, indépendamment du terminal et de ses capacités (y compris pour un terminal ne disposant pas de moyens de calculs performant) de déterminer avec une bonne précision la localisation du terminal à la surface de la zone de couverture (à cet égard, on notera que le procédé ne permet pas de déterminer la hauteur à laquelle se trouve le terminal). La détermination de la position est faite au niveau du NOC ou de la ou des station(s) terrestres, et elle ne peut pas être altérée par un comportement fautif du terminal. Le procédé trouve une application particulièrement intéressante dans le cas du traçage de certains terminaux mobiles (typiquement dans le cas du transport de matières dangereuses ou d'animaux et d'opérations de secours) mais également dans le cas de la géolocalisation de terminaux fixes (typiquement des décodeurs dont l'utilisation est limitée à un territoire donné et pour lesquels on souhaite vérifier la présence sur ledit territoire). Préférentiellement couplé avec un système de géolocalisation standard (e.g. GPS), qui peut avoir une meilleure précision, le procédé selon l'invention permet de certifier que la position déterminée par le terminal est véritable (à l'intérieur d'un certain intervalle d'erreur).

Bien entendu, l'invention n'est pas limitée au mode de réalisation qui vient d'être décrit.

L'invention peut ainsi s'appliquer à différents types de réseaux de télécommunication utilisant un satellite multifaisceaux tel qu'un satellite fonctionnant en bande de fréquence S, K ou X..

## Revendications

1. Procédé (200) de localisation d'un terminal (T) à la surface d'une zone de couverture au moyen d'un réseau de télécommunication (100) pour l'établissement de liaisons radiofréquences, le réseau (100) comportant un satellite de télécommunication (103) à plusieurs faisceaux, dit satellite multifaisceaux, ledit satellite multifaisceaux comportant une antenne multifaisceaux, ladite zone de couverture étant composée d'une pluralité de cellules (A, B, C), chaque cellule étant associée à au moins un faisceau (A, B, C) de liaison avec le satellite (103) auquel est attribué une bande de fréquence, ledit procédé comportant les étapes suivantes :

- transmission (201) en voie montante par ledit terminal (T) d'un message incorporé dans un signal modulé incorporant un message vers ledit satellite (103) à une fréquence partagée par au moins trois faisceaux différents (A, B, C) de liaison en voie montante de sorte que ledit message soit reçu par ledit satellite multifaisceaux (103) via ladite antenne multifaisceaux avec trois amplitudes différentes ;
- transmission (202, 203) en voie descendante par ledit satellite multifaisceaux (103) de trois signaux modulés incorporant ledit message, les premier, deuxième et troisième signaux (S1, S2, S3) correspondant chacun à un faisceau différent (A, B, C) parmi lesdits trois faisceaux ;
- réception (204) par des moyens de réception terrestres desdits premier, deuxième et troisième signaux (S1, S2, S3) ;
- détermination (205, 206) par des moyens de calcul terrestres (102, 116A, 116B, 116C, 105) des amplitudes (P(T, A), P(T, B), P(T, C)) du message envoyé par le terminal incorporé dans lesdits premier, deuxième et troisième signaux (S1, S2, S3) ;
- détermination (207, 208, 209) de la localisation dudit terminal (T) à partir desdites amplitudes (P(T, A), P(T, B), P(T, C)) dudit message incorporé dans lesdits premier, deuxième et troisième signaux.

**2.** Procédé (200) selon la revendication précédente **caractérisé en ce que** ledit signal modulé incorporant ledit message émis par ledit terminal est modulé selon un protocole à étalement de spectre.

**3.** Procédé (200) selon l'une des revendications précédentes **caractérisé en ce que** ledit message incorporé dans ledit premier signal (S1) est reçu par lesdits moyens de réception terrestres avec une amplitude (P(T, A)) plus importante que celles dudit message incorporé dans les deuxième et troisième signaux (S2, S3), ledit procédé comportant les étapes suivantes :

- démodulation (204) par lesdits moyens de calcul terrestres (102, 116A) dudit premier signal (S1) de façon à récupérer les informations relatives au message suivantes :

  o les données utiles du message ;
  o les paramètres d'émission et/ou de codage dudit message ;

- utilisation (205) desdites informations relatives au message pour rechercher ledit message respectivement dans lesdits deuxième et troisième signaux (S2, S3) par lesdits moyens de calcul terrestres (102, 116B, 116C).

**4.** Procédé (200) selon la revendication précédente **caractérisé en ce que** ledit signal incorporant ledit message émis par ledit terminal est modulé selon un protocole à étalement de spectre et lesdits paramètres d'émission et/ou de codage récupérés comportent la séquence binaire d'étalement de spectre.

**5.** Procédé (200) selon l'une des revendications 3 ou 4 **caractérisé en ce que** lesdits moyens de calcul terrestres (102, 116B, 116C) retrouvent ledit message respectivement dans lesdits deuxième et troisième signaux par une opération de corrélation.

**6.** Procédé (200) selon l'une des revendications précédentes **caractérisé en ce que** la transmission (202, 203) en voie descendante par ledit satellite multifaisceaux (103) desdits trois signaux (S1, S2, S3) modulés incorporant ledit message se fait à trois fréquences différentes les unes des autres.

**7.** Procédé selon l'une des revendications précédentes **caractérisé en ce qu'**il comporte une étape (207) de détermination d'au moins deux des trois différences des amplitudes (P(T, A), P(T, B), P(T, C)) dudit message incorporé dans lesdits premier, deuxième et troisième signaux (S1, S2, S3).

**8.** Procédé selon la revendication précédente **caractérisé en ce qu'**il comporte :

- une étape (208) de détermination des courbes représentant la différence des facteurs de mérite correspondant aux dites différences d'amplitudes ;
- une étape (209) de détermination de la localisation dudit terminal (T) correspondant à l'intersection desdites courbes.

**9.** Procédé selon la revendication précédente **caractérisé en ce que** lesdits moyens de réception terrestres reçoivent périodiquement par un ou plusieurs terminaux de référence dont la position exacte est connue, la ou lesdites position(s) permettant de corriger les lignes de facteurs de mérite utilisées pour la détermination de la position dudit terminal.

10. Procédé selon l'une des revendications 7 à 9 **caractérisé en ce qu'**on détermine les trois différences des amplitudes (P(T, A), P(T, B), P(T, C)) dudit message incorporé dans lesdits premier, deuxième et troisième signaux (S1, S2, S3).

**Patentansprüche**

1. Verfahren (200) zur Lokalisierung eines Terminals (T) an der Oberfläche einer Abdeckungszone mittels eines Telekommunikationsnetzes (100) für die Herstellung von Funkfrequenzverbinden, wobei das Netz (100) einen Telekommunikationssatelliten (103) mit mehreren Strahlen, bezeichnet als Multistrahl-Satellit, umfassend eine Multistrahl-Antenne umfasst, wobei die genannte Abdeckungszone aus einer Vielzahl von Zellen (A, B, C) gebildet wird, wobei jede Zelle wenigstens einem Strahl (A, B, C) zur Verbindung mit dem Satellit (103) zugeordnet ist, dem ein Frequenzband zugeordnet ist, wobei das genannte Verfahren die folgenden Stufen umfasst:

   - Übertragung (201) einer Nachricht im Aufwärtskanal durch das genannte Terminal (T), die in ein moduliertes Signal eingebettet ist, das eine Nachricht zu dem genannten Satellit (103) mit einer von mindestens drei unterschiedlichen Verbindungsstrahlen (A, B, C,) im Aufwärtskanal geteilten Frequenz derart eingebettet ist, dass die genannte Nachricht von dem genannten Multistrahl-Satelliten (103) über die genannte Multistrahl-Antenne mit drei unterschiedlichen Amplituden empfangen wird;
   - Übertragung (202, 203) von drei die genannte Nachricht einbettenden modulierten Signalen im Abwärtskanal durch den genannten Multistrahl-Satelliten (103), wobei das erste, zweite und dritte Signal (S1, S2, S3) jeweils einem unterschiedlichen Strahl (A, B, C) aus den genannten drei Strahlen entsprechen;
   - Empfang (204) durch terrestrische Empfangsmittel des genannten ersten, zweiten und dritten Signals (S1, S2, S3);,
   - Bestimmung (205, 206) der Amplituden (P (T, A), P (T, B), P (T, C)) der durch das in das genannte erste, zweite und dritte Signal (S1, S2, S3) eingebettete Terminal versandten Nachricht durch terrestrische Berechnungsmittel (102, 116A, 116B, 116C, 105);
   - Bestimmung (207, 208, 209) der Lokalisierung des genannten Terminals (T) ausgehend von den genannten Amplituden (P (T, A), P (T, B), P (T, C)) der genannten in das erste, zweite und dritte Signal eingebetteten Nachricht.

2. Verfahren (200) gemäß dem voranstehenden Anspruch, **dadurch gekennzeichnet, dass** das genannte modulierte Signal, das die genannte, von dem genannten Terminal ausgegebene Nachricht einbettet, gemäß einem Protokoll mit Spektrumsverteilung moduliert ist.

3. Verfahren (200) gemäß einem der voranstehenden Ansprüche, **dadurch gekennzeichnet, dass** die genannte Nachricht, die in das genannte erste Signal (S1) eingebettet ist, durch die genannten terrestrischen Empfangsmittel mit einer größeren Amplitude (P (T, A)) als der der genannten Nachricht empfangen wird, die in das zweite und dritte Signal (S2, S3) eingebettet ist, wobei das genannte Verfahren die folgenden Stufen umfasst:

   - Demodulation (204) durch die genannten terrestrischen Berechnungsmittel (102, 116A) des genannten ersten Signals (S1) derart, dass die Informationen über die folgenden Nachrichten aufgefangen werden:

     ◦ die Nutzdaten der Nachricht;
     ◦ die Ausgabeparameter / und oder Codierungsparameter der genannten Nachricht;

   - Nutzung (205) der genannten Informationen über die Nachricht zum Auffangen der genannten Nachricht jeweils in dem genannten zweiten und dritten Signal (S2, S3) durch die genannten terrestrischen Berechnungsmittel (102, 116B, 116C).

4. Verfahren (200) gemäß dem voranstehenden Anspruch, **dadurch gekennzeichnet, dass** das genannte Signal, das die von dem genannten Terminal ausgegebene Nachricht einbettet, gemäß einem Protokoll mit Spektrumsverteilung moduliert ist und die genannten Ausgabeparameter und / oder aufgefangenen Codierungsparameter die binäre Verteilungssequenz des Spektrums umfassen.

5. Verfahren (200) gemäß Anspruch 3 oder 4, **dadurch gekennzeichnet, dass** die genannten terrestrischen Berechnungsmittel (102, 116B, 116C) die genannte Nachricht jeweils in dem genannten zweiten und dritten Signal durch eine Korrelationsoperation auffangen.

6. Verfahren (200) gemäß einem der voranstehenden Ansprüche, **dadurch gekennzeichnet, dass** die Übertragung (202, 203) der genannten, die genannte Nachricht einbettenden drei modulierten Signale (S1, S2, S3) im Abwärtskanal durch den genannten Multistrahl-Satellit (103) bei drei voneinander unterschiedlichen Frequenzen erfolgt.

7. Verfahren gemäß einem der voranstehenden Ansprüche, **dadurch gekennzeichnet, dass** es eine Stufe (207) zur Bestimmung von wenigstens zwei der drei Unterschieden der Amplituden (P (T, A), P (T, B), P (T, C)) der genannten Nachricht umfasst, die in das genannten erste, zweite und dritte Signal (S1, S2, S3) eingebettet ist.

8. Verfahren gemäß dem voranstehenden Anspruch, **dadurch gekennzeichnet, dass** es umfasst:

   - eine Stufe (208) zur Bestimmung der Kurven, die die Differenz der Gütefaktoren darstellen, die den genannten Amplitudenunterschieden entsprechen;
   - eine Stufe (209) zur Bestimmung der Lokalisierung des genannten Terminals (T), das der Schnittstelle der genannten Kurven entspricht.

9. Verfahren gemäß dem voranstehenden Anspruch, **dadurch gekennzeichnet, dass** die genannten terrestrischen Empfangsmittel periodisch durch ein oder mehrere Referenzterminal(s) empfangen werden, dessen / deren genaue Position bekannt ist, wobei, die genaue(n) Position(en) die Korrektur der Linien der Gütefaktoren zulässt zulassen, die zur Bestimmung der Position des genannten Terminals verwendet werden.

10. Verfahren gemäß Anspruch 7 bis 9, **dadurch gekennzeichnet, dass** die drei Unterschiede der Amplituden (P (T, A), P (T, B), P (T, C)) der genannten Nachricht, die in das genannte erste, zweite und dritte Signale (S2, S2, S3) eingebettet ist, bestimmt werden.

## Claims

1. Method (200) for positioning a terminal (T) on the surface of a coverage area by means of a telecommunication network (100) for establishing radiofrequency links, the network (100) comprising a telecommunication satellite (103) with several beams, called a multibeam satellite, said multibeam satellite comprising a multibeam antenna, said coverage area being composed of a plurality of cells (A, B, C), each cell being associated with at least one beam (A, B, C) for linking to the satellite (103) to which a frequency band is assigned, said method comprising the following steps:

   - uplink transmission (201) by said terminal (T) of a message contained in a modulated signal containing a message to said satellite (103) at a frequency shared by at least three different uplink beams (A, B, C), such that said message is received by said multibeam satellite (103) through said multibeam antenna with three different amplitudes;
   - downlink transmission (202, 203) by said multibeam satellite (103) of three modulated signals containing said message, the first, second and third signals (S1, S2, S3) each corresponding to a different beam (A, B, C) among said three beams;
   - reception (204) by terrestrial reception means of said first, second and third signals (S1, S2, S3) ;
   - determination (205, 206) of the amplitudes (P(T, A), P(T, B), P(T, C)) of the message sent by the terminal contained in said first, second and third signals (S1, S2, S3), by terrestrial calculation means (102, 116A, 116B, 116C, 105);
   - determination (207, 208, 209) of the position of said terminal (T) using said amplitudes (P(T, A), P(T, B), P(T, C)) of said message contained in said first, second and third signals.

2. Method (200) according to the previous claim, **characterised in that** said modulated signal containing said message transmitted by said terminal is modulated according to a spread spectrum protocol.

3. Method (200) according to one of the previous claims, **characterised in that** said message contained in said first signal (S1) is received by said terrestrial reception means with a larger amplitude (P(T, A)) than the amplitudes of said message contained in the second and third signals (S2, S3), said method including the following steps:

- demodulation (204) by said terrestrial calculation means (102, 116A) of said first signal (S1) so as to retrieve the following information about the message:

  . payload of the message;
  . emission and/or encoding parameters of said message.

- use (205) of said information about the message to search for said message in said second and third signals (S2, S3) respectively using said terrestrial calculation means (102, 116B, 116C).

4. Method (200) according to the previous claim, **characterised in that** said signal containing said message transmitted by said terminal is modulated according to a spread spectrum protocol and said retrieved emission and/or encoding parameters comprise the binary spread spectrum sequence.

5. Method (200) according to one of claims 3 or 4, **characterised in that** said terrestrial calculation means (102, 116B, 116C) find said message in said second and third signals respectively using a correlation operation.

6. Method (200) according to any one of the previous claims, **characterised in that** the downlink transmission (202, 203) by said multibeam satellite (103) of said three modulated signals (S1, S2, S3) containing said message takes place at three different frequencies.

7. Method according to one of the previous claims, **characterised in that** it comprises a step (207) to determine at least two of the three differences in amplitudes (P (T, A), P (T, B), P (T, C)) of said message contained in said first, second and third signals (S1, S2, S3).

8. Method according to the previous claim, **characterised in that** it comprises:

   - a step (208) to determine curves representing the difference between the figures of merit corresponding to said amplitude difference;
   - a step (209) to determine the position of said terminal (T) corresponding to the intersection of said curves.

9. Method according to the previous claim, **characterised in that** said terrestrial reception means periodically receive said position(s) through one or several reference terminals for which the exact positions are known, that can be used to correct the lines of the figures of merit used to determine the position of said terminal.

10. Method according to one of claims 7 to 9, **characterised in that** the three differences of amplitudes (P (T, A), P(T, B), P (T, C)) of said message contained in said first, second and third signals (S1, S2, S3) are determined.

**Fig. 1**

**Fig. 2**

**Fig. 3**

LA1

LA

LA

LA

**Fig. 4**

LB1

LB

LB

LB

LB

Rome

**Fig. 5**

LC1

LC   LC   LC

Rome

Fig. 6

DAB    DAB

DBC

Fig. 7

DAC

Fig. 8

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100054131 A, del Rio Herrero

**Littérature non-brevet citée dans la description**

- **P. PATEL ; J. HOLTZMAN.** Analysis of a DS/CDMA successive interférence cancellation scheme using corrélations. *IEEE Global Telecommunications Conférence 1993, GLOBECOM '93,* 29 Novembre 1993, vol. 1, 76-80
- **P. PATEL ; J. HOLTZMAN.** *Analysis of a simple successive interférence cancellation scheme in a DS/CDMA system IEEE Journal on Selected Areas in Communications,* Juin 1994, vol. 12 (5), 796-807

- **K. PEDERSEN ; T. KOLDING ; I. SESKAR ; J. HOLTZMAN.** Practical Implementation of Successive interférence Cancellation in DS/CDMA Systems. *Proceedings ICUPC'96, Cambridge, MA,* 1996, 321-325